# FASCICULE DE BREVET EUROPEEN

(11) **EP 3 197 635 B1**
(45) Date de publication et mention de la délivrance du brevet: **28.08.2019**
(21) Numéro de dépôt: 15788465.1
(22) Date de dépôt: 17.09.2015
(51) Int. Cl.: B23Q 3/06, B25B 5/00

(54) **DISPOSITIF DE BRIDAGE D'UNE PIÈCE BRUTE À USINER**
VORRICHTUNG ZUR KLEMMUNG EINES UNBEHANDELTEN, ZU BEARBEITENDEN TEILS
DEVICE FOR CLAMPING AN UNPROCESSED PART TO BE MACHINED

(30) Priorité: 26.09.2014 FR 1459118
(43) Date de publication de la demande: 02.08.2017
(73) Titulaire: Stelia Aerospace, 17300 Rochefort (FR)
(72) Inventeur: RABALLAND, Patrick, F-44500 La Baule (FR); PROVIN, Maël, F-44410 Saint Lyphard (FR)
(74) Mandataire: Argyma
(86) Numéro de dépôt international: PCT/FR2015/052492
(87) Numéro de publication internationale: WO 2016/046474

(56) Documents cités:
- EP-A1- 1 563 958
- GB-A- 2 458 738

## Description

### 1. Domaine technique de l'invention

Le domaine de l'invention est la mise en position et le maintien en position de pièces brutes à usiner. L'invention concerne plus particulièrement un dispositif de bridage d'une pièce à usiner, notamment une pièce d'une partie d'un fuselage d'un aéronef.

### 2. Arrière-plan technologique

L'usinage d'une pièce mécanique consiste à enlever de la matière d'une pièce mécanique brute pour obtenir une pièce mécanique finie, désignée dans tout le texte par les termes de pièce cible ou pièce finie.

Cette pièce cible est définie par une géométrie et des dimensions prédéterminées aux tolérances près. Les opérations d'usinage mettent en oeuvre une machine-outil à commande numérique dont la fonction est de déplacer un outil de coupe le long de la pièce brute suivant une trajectoire déterminée pour enlever de la matière de la pièce brute en vue d'obtenir la pièce cible.

La précision de l'usinage est conditionnée notamment par la précision des opérations de mise en position et de maintien de la pièce brute sur un support d'usinage. Ces opérations consistent notamment à caler et brider la pièce sur le support d'usinage. Si la pièce brute comprend plusieurs faces distinctes à usiner, il est nécessaire après l'usinage d'une première face, de débrider la pièce, la retourner, puis la caler et la brider à nouveau pour usiner une nouvelle face. En d'autres termes, l'usinage d'une pièce consiste à caler et brider la pièce sur une première face, puis à actionner l'outil de coupe. Il faut ensuite débrider la pièce, la repositionner sur la seconde face à usiner, puis actionner à nouveau l'outil de coupe. Ces opérations doivent être répétées pour chaque face de la pièce à usiner.

En outre, une pièce usinée subit des déformations dues au relâchement des contraintes résiduelles dans la pièce. Il est donc souvent nécessaire, au cours de l'usinage, de libérer la pièce de son bridage pour observer les déformations de la pièce dues au relâchement des contraintes résiduelles dans la pièce. Cette déformation naturelle explique qu'il est en pratique difficile d'obtenir en une seule passe la pièce cible à partir d'une pièce brute, en particulier lorsque la pièce cible présente des spécifications très précises et que le matériau de la pièce à usiner présente une forte aptitude à la déformation. Il est alors nécessaire de libérer la pièce de son bridage pour qu'elle puisse se déformer, d'observer les déformations subies, de redéfinir une passe d'usinage pour corriger les déformations observées, de brider la pièce à nouveau et d'effectuer une nouvelle passe d'usinage. Ces opérations doivent être répétées jusqu'à obtenir la pièce finie souhaitée aux tolérances acceptables prédéterminées.

En d'autres termes, il est nécessaire de multiplier les opérations de calage, de bridage et de découpe d'une pièce à usiner pour atteindre la pièce cible souhaitée.

Ces opérations de calage et de bridage sont contraignantes et longues à mettre en oeuvre, en particulier pour les pièces complexes telles que les pièces de fuselage d'aéronef, et notamment les encadrements d'ouvertures.

EP-1563958A1 divulgue un dispositif de bridage selon le préambule de la revendication 1.

Les inventeurs ont donc cherché à proposer un dispositif de bridage d'une pièce à usiner qui pallie les inconvénients susmentionnés et permet notamment d'accélérer les opérations d'usinage.

### 3. Objectifs de l'invention

L'invention vise à fournir, dans au moins un mode de réalisation de l'invention, un dispositif de bridage d'une pièce à usiner qui permet de limiter les opérations de manutention de la pièce à usiner.

L'invention vise aussi à fournir, dans au moins un mode de réalisation de l'invention, un dispositif de bridage qui permet de minimiser les besoins de libération complète de la pièce tout en permettant un relâchement des contraintes résiduelles dans la pièce.

L'invention vise aussi à fournir, dans au moins un mode de réalisation de l'invention, un dispositif de bridage qui contribue à faciliter l'accès à la pièce à usiner par un outil de coupe d'une machine-outil d'usinage.

L'invention vise aussi à fournir, dans au moins un mode de réalisation de l'invention, un dispositif de bridage qui contribue à réduire le temps nécessaire pour usiner une pièce.

### 4. Exposé de l'invention

Pour ce faire, l'invention concerne un dispositif de bridage d'une pièce brute à usiner caractérisé en ce qu'il comprend :
- un bâti,
- des moyens de serrage de ladite pièce à usiner adaptés pour serrer ladite pièce à usiner,
- des moyens de verrouillage commandé à au moins deux états desdits moyens de serrage, un état verrouillé dans lequel lesdits moyens de serrage sont immobilisés par rapport au bâti, et un état déverrouillé dans lequel lesdits moyens de serrage sont libres de se déplacer par rapport au bâti, tout en maintenant serrée ladite pièce à usiner,
- des moyens de support de la pièce à usiner montés mobiles par rapport audit bâti de manière à permettre, lorsque les moyens de verrouillage sont dans ledit état déverrouillé, un déplacement de ladite pièce à usiner par rapport au bâti.

Un dispositif de bridage selon l'invention permet à la fois de maintenir la pièce à usiner sur des moyens de support de la pièce et de brider la pièce par la combinaison de moyens de serrage et de moyens de verrouillage de ces moyens de serrage. Le bridage est obtenu par la combinaison de moyens de serrage adaptés pour immobiliser la pièce à usiner par rapport à un premier repère formés de ces moyens de serrage, et des moyens de verrouillage des moyens de serrage adaptés pour immobiliser le premier repère par rapport au bâti. En d'autres termes, l'originalité de l'invention est notamment d'avoir décomposé le bridage isostatique (ou hyperstatique) de la pièce par rapport au bâti en un serrage de la pièce par des premiers moyens et un verrouillage de ces premiers moyens par rapport au bâti. Un dispositif selon l'invention est donc configuré pour pouvoir libérer la pièce par rapport au bâti, ce qui permet à la pièce de se déformer sous l'effet du relâchement des contraintes résiduelles dans la pièce. En revanche, la pièce est maintenue par les moyens de serrage, ce qui permet à la pièce d'être rapidement repositionnée et bridée à nouveau dès le relâchement des contraintes résiduelles dans la pièce. En d'autres termes, les moyens de serrage, dans l'état déverrouillé des moyens de verrouillage, n'entravent pas le relâchement des contraintes résiduelles de la pièce tout en permettant de garder un contrôle en bridant à nouveau rapidement la pièce suivant sa nouvelle position sur les moyens de support, et donc, une manipulation rapide et aisée de la pièce dès le relâchement des contraintes résiduelles réalisé.

Un dispositif selon l'invention contribue donc à la réduction du temps d'usinage d'une pièce en facilitant les opérations de bridage et de libération de la pièce à usiner dans le but de relâcher les contraintes résiduelles de la pièce.

Selon l'invention, les moyens de support sont en outre montés mobiles par rapport audit bâti de manière à permettre, lorsque les moyens de verrouillage sont dans ledit état déverrouillé, un déplacement de ladite pièce à usiner par rapport au bâti.

En d'autres termes, les moyens de support sont également montés mobiles par rapport au bâti de manière à pouvoir déplacer la pièce par rapport au bâti tout en maintenant la pièce serrée par lesdits moyens de serrage. Ce déplacement n'est possible que dans l'état déverrouillé des moyens de verrouillage, c'est-à-dire dans un état dans lequel les moyens de serrage sont libérés par rapport au bâti.

Selon une variante avantageuse, les moyens de support montés mobiles par rapport au bâti sont en outre commandés de manière à contrôler le déplacement de ladite pièce à usiner par rapport audit bâti.

Cette variante avantageuse permet de contrôler le déplacement de la pièce par rapport au bâti et donc, par exemple, d'augmenter l'accessibilité de l'outil de coupe vis-à-vis de zones de la pièce préalablement inaccessibles à cet outil de coupe à cause de la position précédente de la pièce par rapport au bâti.

Avantageusement et selon l'invention, lesdits moyens de support sont escamotables lorsque lesdits moyens de verrouillage sont dans ledit état verrouillé, de manière à pouvoir libérer la pièce desdits moyens de support tout en maintenant en position ladite pièce à usiner.

Selon cette variante, les moyens de support sont escamotables et les moyens de serrage font alors office de moyens de maintien de la pièce à usiner. Les moyens de support étant escamotables, l'accessibilité à la pièce est facilitée.

Lors du déplacement de la pièce à usiner (soit par le déverrouillage des moyens de verrouillage, soit par le déplacement des moyens de support et/ou des moyens de serrage), la position précise de la pièce par rapport au bâti peut être récupérée par des moyens de palpage de la pièce à usiner ou par des moyens vidéo de détection de la pièce à usiner. Ces moyens de palpage ou ces moyens vidéo sont avantageusement reliés à une unité de traitement et de commande qui pilote une machine-outil d'usinage.

Avantageusement et selon l'invention, lesdits moyens de support sont configurés pour permettre un maintien vertical de la pièce à usiner de manière à libérer au moins deux faces opposées de la pièce.

L'invention concerne également une machine-outil d'usinage comprenant au moins un outil de coupe et un dispositif de bridage selon l'invention.

L'invention concerne également un dispositif de bridage d'une pièce à usiner et une machine-outil d'usinage caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- les figures 1a, 1b, 1e, 1d et 1e sont des vues schématiques des différentes étapes d'usinage d'une pièce brute mettant en oeuvre un dispositif de bridage de l'art antérieur,
- les figures 2a, 2b, 2c, et 2d sont des vues schématiques des différentes étapes d'usinage d'une pièce brute mettant en oeuvre un dispositif de bridage selon un mode de réalisation non couvert par l'invention,
- les figures 3a, 3b, 3c, et 3d sont des vues schématiques des différentes étapes d'usinage d'une pièce brute mettant en oeuvre un dispositif de bridage selon un mode de réalisation de l'invention.

### 6. Description détaillée de modes de réalisation de l'invention

Sur les figures, les échelles et les proportions ne sont pas strictement respectées et ce, à des fins d'illustration et de clarté.

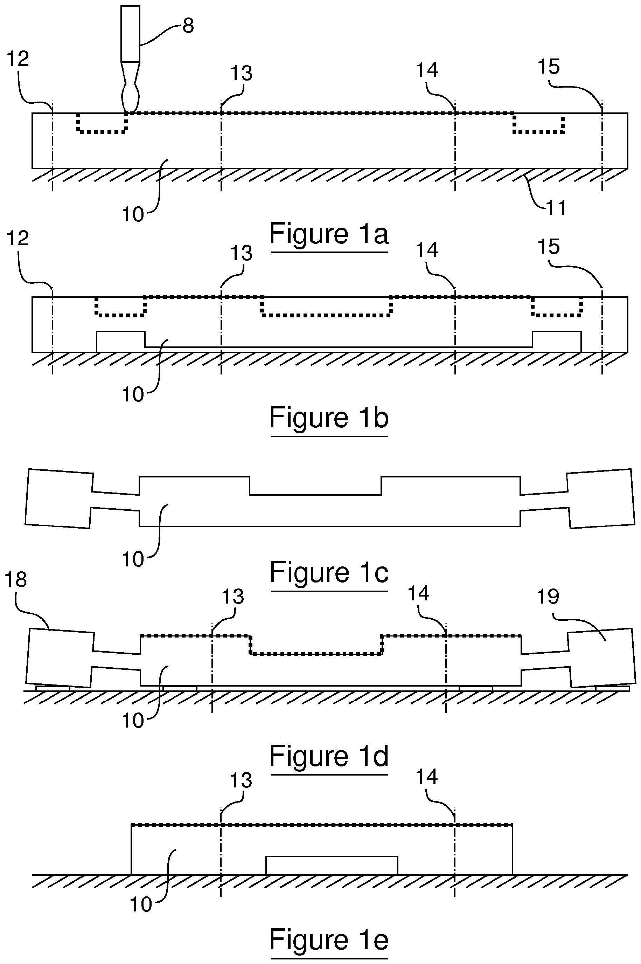

Les figures 1a, 1b, 1e, 1d et 1e représentent les différentes étapes d'usinage des deux faces opposées d'une pièce 10 mécanique mettant en oeuvre un dispositif de bridage de l'art antérieur. Ce dispositif de bridage de l'art antérieur comprend un support 11 plan sur lequel la pièce 10 est posée. Ce dispositif de bridage comprend en outre des moyens 12, 13, 14, 15 de bridage de la pièce adaptés pour maintenir la pièce 10 à usiner immobile par rapport au support 11. Ces moyens 12, 13, 14, 15 de bridage sont par exemple des vis qui traversent les extrémités de la pièce 10 à usiner et qui viennent se fixer dans le support 11. Un outil 8 de coupe est amené en interférence avec une première face de la pièce 10 à usiner pour un enlèvement de matière. Sur toutes les figures, les pointillés représentent schématiquement la trajectoire de l'outil 8 de coupe au cours de l'usinage de la face considérée.

La figure 1b représente la même opération sur la deuxième face de la pièce. Pour passer de la situation de la figure la à la situation de la figure 1b, les vis de bridage ont été enlevées, la pièce 10 a été retournée et les vis de bridage ont été remises en place avant l'usinage de la deuxième face.

La figure le représente la pièce 10 libérée des moyens 12 de bridage après l'usinage de deux faces opposées de la pièce 10. La pièce 10 mécanique peut donc se déformer sous l'effet du relâchement des contraintes résiduelles dans la pièce 10 mécanique.

Cette déformation de la pièce impose une deuxième passe d'usinage de chacune des deux faces opposées de la pièce 10 mécanique pour obtenir la pièce cible visée.

La figure 1d représente la pièce 10 bridée par les vis 13 et 14. L'usinage de finition d'une première face de la pièce 10 est représenté. Au cours de cette étape, les lardons 18, 19 de bridage sont découpés.

La figure le représente l'usinage de finition de l'autre face de la pièce 10. Pour passer de la position de la figure 1d à la position de la figure 1e, outre la découpe des lardons 18, 19 de bridage, les vis 12, 13, 14, 15 de bridage ont été enlevées, la pièce 10 a été retournée et les vis 13, 14 de bridage ont été repositionnées.

On constate donc qu'il est nécessaire pour obtenir la pièce finie recherchée de mettre en oeuvre pas moins de quatre bridages successifs de la pièce 10 et autant de manipulations de la pièce 10.

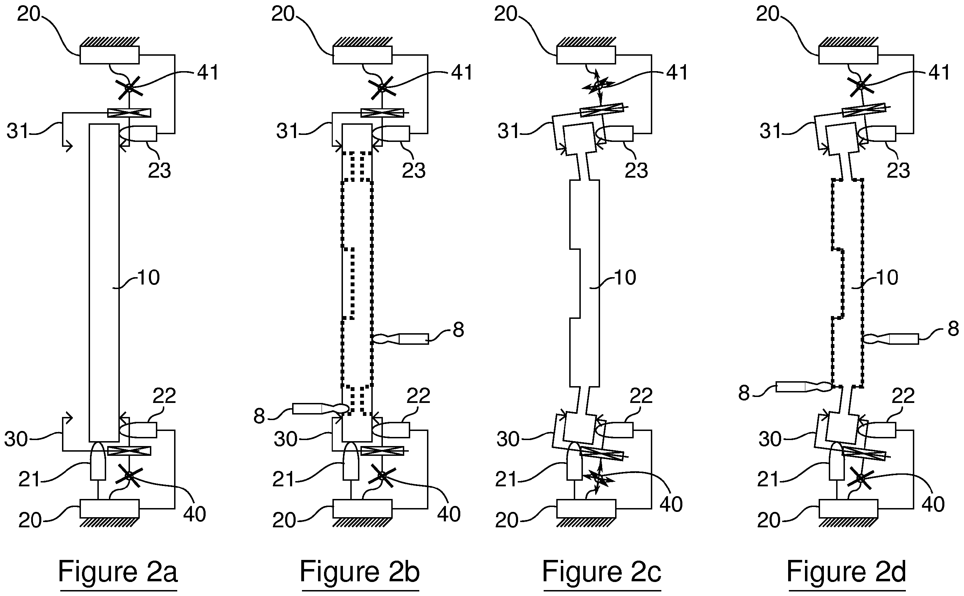

Les figures 2a, 2b, 2c et 2d représentent schématiquement un dispositif de bridage selon un mode de réalisation non couvert par l'invention au cours des étapes successives d'usinage de la même pièce 10 en vue d'obtenir une pièce finie identique à celle obtenue à l'issue de l'étape représentée sur la figure le.

Un dispositif de bridage de la pièce 10 comprend un bâti 20, des butées 21, 22, 23 de support de la pièce 10 mécanique à usiner, des moyens 30, 31 de serrage de la pièce 10 mécanique et des moyens 40, 41 de verrouillage commandé de ces moyens 30, 31 de serrage.

Dans ce mode de réalisation, la pièce 10 est maintenue en position verticale par des butées 21, 22, 23 qui font office de moyens de support. Chaque extrémité longitudinale de la pièce 10 est associée à des moyens de serrage et des moyens de verrouillage propres à cette extrémité.

Les moyens 30, 31 de serrage sont par exemple des étaux ou des vérins adaptés pour maintenir respectivement chaque extrémité de la pièce 10 serrée.

Les moyens de verrouillage 40, 41 sont reliés aux moyens de serrage 30, 31 et sont configurés pour immobiliser ces moyens de serrage 30, 31 par rapport au bâti 20 dans un état verrouillé, et libérer ces moyens 30, 31 de serrage par rapport au bâti dans un état déverrouillé.

Ces moyens de verrouillage sont par exemple formés d'un système magnétique adapté pour bloquer sur commande tout déplacement d'un élément solidaire des moyens de serrage et libérer cet élément dans l'état déverrouillé. Selon un autre mode de réalisation, ces moyens de verrouillage sont formés de vérins dont le mouvement de translation de la tige du vérin peut être verrouillé par un dispositif électromécanique, électropneumatique ou hydraulique.

Selon le mode de réalisation des figures, les moyens 30, 31 de serrage sont configurés pour être dans une première position, dite position ouverte, dans laquelle ils n'exercent aucune force de serrage sur la pièce 10 à usiner (position représentée sur la figure 2a) et dans une deuxième position, dite position fermée, dans laquelle ils exercent une force de serrage sur la pièce 10 à usiner pour la maintenir en position (position représentée sur les figures 2b, 2c, 2d). Dans la position ouverte, un opérateur peut venir loger la pièce 10 à usiner sur les butées 21, 22, 23 de support. Une fois la pièce 10 en position, les moyens de serrage 30, 31 sont basculés dans la position fermée. Le passage de la position ouverte à la position fermée peut être réalisé par des moyens commandés.

La figure 2b est une vue de l'usinage des deux faces de la pièce 10. Comme on le constate, aucune libération du bridage de la pièce n'est nécessaire pour passer de l'usinage d'une face à l'autre du fait notamment du maintien de la pièce par ses extrémités et de la position verticale de la pièce. Sur la figure 2b, les moyens 30, 31 sont en position fermée et exercent une force de serrage sur la pièce, et les moyens 40, 41 de verrouillage sont en position verrouillée de sorte que les moyens 30, 31 de serrage sont immobilisés par rapport au bâti 20.

Sur la figure 2c, les moyens 40, 41 de verrouillage ont été basculés en position déverrouillée de manière à autoriser le déplacement spontané des moyens 30, 31 de serrage. La pièce 10 reste en position sur les butées 21, 22, 23 tout en pouvant se déformer sous l'effet du relâchement de ses contraintes résiduelles.

Sur la figure 2d, les moyens 40, 41 de verrouillage ont été rebasculés dans l'état verrouillé pour brider complètement la pièce par rapport au bâti et autoriser une passe de finition de l'usinage pour contrer les déformations de la pièce 10.

A l'issue de cette étape, la pièce 10 finie est obtenue. Les lardons de bridage sont découpés à l'issue de cette étape de finition. On constate donc que pour obtenir la même pièce finie que celle obtenue avec un dispositif de bridage de l'art antérieur, le dispositif selon l'invention ne nécessite que deux bridages de la pièce par rapport au bâti. En outre, les opérations de libération de la pièce sont bien plus simples à réaliser étant donné qu'elles consistent simplement à libérer les moyens de verrouillage pour que la pièce puisse se déformer, tout en étant maintenue serrée par ses extrémités.

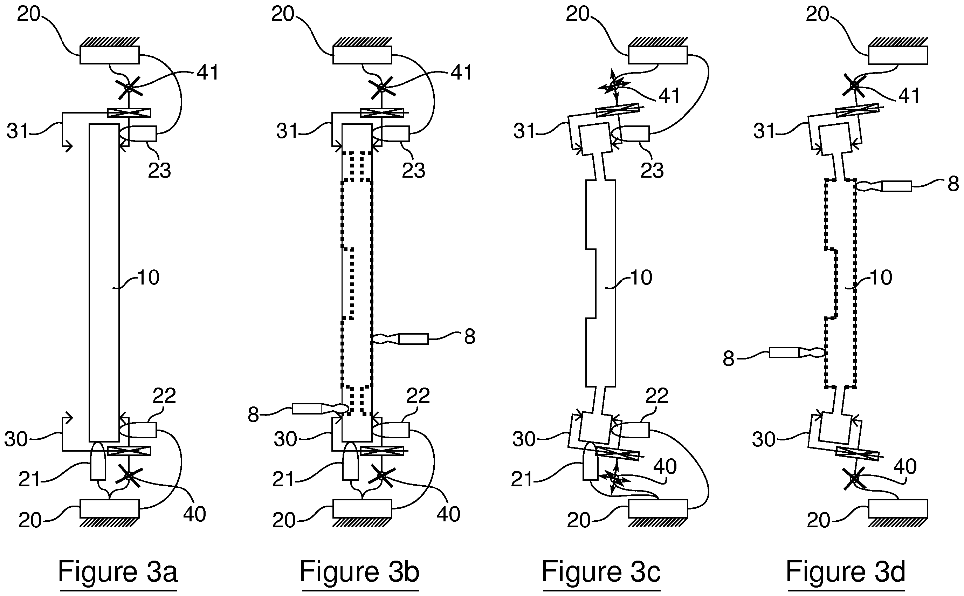

Le dispositif de bridage des figures 3a à 3d est identique à celui des figures 2a à 2d, à la différence près que les butées 21, 22, 23 sont montées mobiles par rapport au bâti 20 conformément à l'invention.

Ainsi, les deux premières étapes de l'usinage de la pièce 10 schématisées par les figures 3a et 3b sont identiques aux étapes schématisées par les figures 2a et 2b. Ces butées 21, 22, 23 mobiles permettent en revanche, et tel que représenté à la figure 3c, de déplacer la pièce 10 par rapport au bâti 20.

Cela permet de déplacer la pièce par rapport au bâti 20 et par exemple de faire en sorte, sur la figure 3c, d'augmenter l'accessibilité de l'outil de coupe vis-à-vis de zones de la pièce 10 préalablement inaccessibles à cet outil de coupe à cause de la position précédente de la pièce par rapport au bâti (figure 3b).

Ces butées 21, 22, 23 mobiles sont par exemple formées par des pions d'appui reliés à des mécanismes type bielles et actionneurs type vérins.

Selon un mode de réalisation avantageux et tel que représenté par la figure 3d, les butées 21, 22, 23 sont en outre escamotables de manière à faciliter l'accès à la pièce 10 à usiner.

Les lardons de bridage sont découpés à l'issue de cette étape de finition.

L'invention ne se limite pas aux seuls modes de réalisation décrits. En particulier, d'autres types de moyens de serrage ou de moyens de verrouillage peuvent être mis en oeuvre pour réaliser l'invention.

## Revendications

1. Dispositif de bridage d'une pièce (10) brute à usiner comprenant:
- un bâti (20),
- des moyens (30, 31) de serrage de ladite pièce (10) à usiner adaptés pour serrer ladite pièce (10) à usiner,
- des moyens (40, 41) de verrouillage commandé à au moins deux états desdits moyens (30, 31) de serrage, un état verrouillé dans lequel lesdits moyens (30, 31) de serrage sont immobilisés par rapport au bâti (20), et un état déverrouillé dans lequel lesdits moyens (30, 31) de serrage sont libres de se déplacer par rapport au bâti (20), tout en maintenant serrée ladite pièce (10) à usiner,
**caractérisé en ce qu'**il comprend en outre
- des moyens (21, 22, 23) de support de la pièce à usiner, distincts des moyens (30, 31) de serrage, montés mobiles par rapport audit bâti (20) de manière à permettre, lorsque les moyens (40, 41) de verrouillage sont dans ledit état déverrouillé, un déplacement de ladite pièce (10) à usiner par rapport au bâti (20).

2. Dispositif selon la revendication 1, **caractérisé en ce que** lesdits moyens (21, 22, 23) de support montés mobiles par rapport au bâti (20) sont commandés de manière à contrôler le déplacement de ladite pièce (10) à usiner par rapport audit bâti (20).

3. Dispositif selon l'une des revendications 1 ou 2, **caractérisé en ce que** lesdits moyens (21, 22, 23) de support sont escamotables lorsque lesdits moyens (40, 41) de verrouillage sont dans ledit état verrouillé, de manière à pouvoir libérer la pièce (10) desdits moyens (21, 22, 23) de support tout en maintenant en position ladite pièce (10) à usiner.

4. Dispositif selon l'une des revendications 1 à 3, **caractérisé en ce que** lesdits moyens (21, 22, 23) de support sont des butées sur lesquelles ladite pièce (10) à usiner peut reposer.

5. Dispositif selon l'une des revendications 1 à 4, **caractérisé en ce que** lesdits moyens (21, 22, 23) de support sont configurés pour permettre un maintien vertical de la pièce (10) à usiner de manière à libérer au moins deux faces opposées de la pièce (10).

6. Dispositif selon l'une des revendications 1 à 5, **caractérisé en ce que** lesdits moyens (40, 41) de serrage comprennent des vérins et/ou des étaux.

7. Machine-outil d'usinage d'une pièce brute comprenant au moins un outil (8) de coupe **caractérisé en ce qu'**il comprend en outre un dispositif de bridage selon l'une des revendications 1 à 6.

## Patentansprüche

1. Vorrichtung zur Klemmung eines unbehandelten, zu bearbeitenden Teils (10), umfassend:
- ein Gestell (20),
- Spannmittel (30, 31) des zu bearbeitenden Teils (10), die geeignet sind, das zu bearbeitende Teil (10) zu spannen,
- Verriegelungsmittel (40, 41), die in mindestens zwei Zustände der Spannmittel (30, 31) gelenkt werden, einen verriegelten Zustand, in welchem die Spannmittel (30, 31) in Bezug auf das Gestell (20) blockiert sind, und einen entriegelten Zustand, in welchem die Spannmittel (30, 31) frei sind, sich in Bezug auf das Gestell (20) zu verlagern, wobei dabei das zu bearbeitende Teil (10) in Position gehalten wird,
**dadurch gekennzeichnet, dass** sie ferner umfasst
- Haltemittel (21, 22, 23) des zu bearbeitenden Teils, die sich von den Spannmitteln (30, 31) unterscheiden, die in Bezug auf das Gestell (20) derart beweglich angebracht sind, dass sie, wenn die Verriegelungsmittel (40, 41) im entriegelten Zustand sind, eine Verlagerung des zu bearbeitenden Teils (10) in Bezug auf das Gestell (20) erlauben.

2. Vorrichtung nach Anspruch 1, **dadurch gekennzeichnet, dass** die in Bezug auf das Gestell (20) beweglich angebrachten Haltemittel (21, 22, 23) derart gelenkt werden, dass die Verlagerung des zu bearbeitenden Teils (10) in Bezug auf das Gestell (20) kontrolliert wird.

3. Vorrichtung nach einem der Ansprüche 1 oder 2, **dadurch gekennzeichnet, dass** die Haltemittel (21, 22, 23) einziehbar sind, wenn die Verriegelungsmittel (40, 41) im verriegelten Zustand sind, so dass die Teile (10) von den Haltemitteln (21, 22, 23) freigegeben werden können, wobei dabei das zu bearbeitende Teil (10) in Position gehalten wird.

4. Vorrichtung nach einem der Ansprüche 1 bis 3, **dadurch gekennzeichnet, dass** die Haltemittel (21, 22, 23) Anschläge sind, auf denen das zu bearbeitende Teil (10) aufliegen kann.

5. Vorrichtung nach einem der Ansprüche 1 bis 4, **dadurch gekennzeichnet, dass** die Haltemittel (21, 22, 23) konfiguriert sind, um ein vertikales Halten des zu bearbeitenden Teils (10) derart zu erlauben, dass mindestens zwei gegenüberliegende Seiten des Teils (10) freigegeben sind.

6. Vorrichtung nach einem der Ansprüche 1 bis 5, **dadurch gekennzeichnet, dass** die Spannmittel (40, 41) Zylinder und/oder Schraubstöcke umfassen.

7. Werkzeugmaschine zur Bearbeitung eines unbearbeiteten Teils, umfassend mindestens ein Schneidwerkzeug (8), **dadurch gekennzeichnet, dass** sie ferner eine Klemmvorrichtung nach einem der Ansprüche 1 bis 6 umfasst.

## Claims

1. A device for clamping a raw workpiece (10) comprising:
- a body (20),
- tightening means (30, 31) for said workpiece (10) adapted to tighten said workpiece (10),
- controlled locking means (40, 41) with at least two states of said tightening means (30, 31), a locked state in which said tightening means (30, 31) are secured with respect to the body (20), and an unlocked state in which said tightening means (30, 31) are free to move with respect to the body (20), while holding said workpiece (10) tightened,
**characterised in that** it further comprises
- support means (21, 22, 23) for the workpiece, distinct from the tightening means (30, 31), movably mounted with respect to said body (20) so as to enable, when the locking means (40, 41) are in said unlocked state, a movement of the workpiece (10) with respect to the body (20).

2. The device according to claim 1, **characterised in that** said support means (21, 22, 23) movably mounted with respect to the body (20) are controlled so as to check the movement of said workpiece (10) with respect to said body (20).

3. The device according to one of claims 1 or 2, **characterised in that** said support means (21, 22, 23) are retractable when said locking means (40, 41) are in said locked state, so as to be able to release the piece (10) from said support means (21, 22, 23) while holding said workpiece (10).

4. The device according to one of claims 1 to 3, **characterised in that** said support means (21, 22, 23) are stops against which said workpiece (10) can abut.

5. The device according to one of claims 1 to 4, **characterised in that** said support means (21, 22, 23) are configured to enable the workpiece (10) to be held vertically so as to release at least two opposite faces of the piece (10).

6. The device according to one of claims 1 to 5, **characterised in that** said tightening means (40, 41) comprise cylinders and/or vices.

7. A machine-tool for machining a raw piece comprising at least one cutting tool (8) **characterised in that** it further comprises a clamping device according to one of claims 1 to 6.
